# EUROPEAN PATENT SPECIFICATION

(11) **EP 1 387 313 B1**
(45) Date of publication and mention of the grant of the patent: **06.09.2006**
(21) Application number: 03254399.3
(22) Date of filing: 11.07.2003
(51) Int. Cl.: G06K 19/07, G06K 7/00

(54) **RFID-tag with tuning means**
RFID-Tag mit Abstimmschaltung
Etiquette d'identification radio fréquence avec des moyens d'ajustement de sa fréquence de résonance

(30) Priority: 30.07.2002 JP 2002221841
(43) Date of publication of application: 04.02.2004
(73) Proprietor: OMRON CORPORATION, Kyoto-shi, Kyoto 600-8530 (JP)
(72) Inventor: Fukuoka, Shinishiro, c/o Omron Corporation, Shiokoji-dori, Kyoto-shi, Kyoto 600-8530 (JP)
(74) Representative: Calderbank, Thomas Roger

(56) References cited:
- EP-A- 1 061 663
- WO-A-02/15124
- FINKENZELLER, KLAUS: "RFID-Handbuch: Grundlagen und praktische Anwendungen induktiver Funkanlagen, Transponder und kontaktloser Chipkarten" 1998, HANSER , MUNICH, VIENNA , XP002255444 ISBN: 3-446-19376-6 * page 124 - page 132 *

## Description

The present invention relates to RFID tags and a RFID interrogator making use of the same.

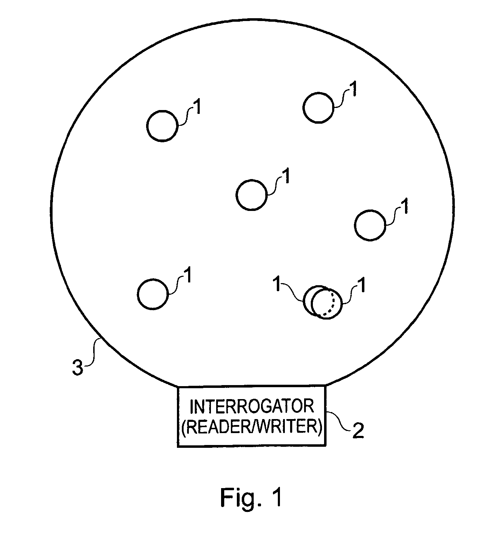

Fig. 1 is a view showing an outline of a system comprising RFID tags and a RFID interrogator making use of the tags. In Fig. 1, the reference numeral 1 denotes RFID tags. An interrogator (reader/writer) 2 has a detection area 3 having a predetermined field. That is, in this system, a plurality of tags 1, 1, ··· are in some cases present in the detection area 3.

In the case where RFID tags 1 are loaded on books, envelopes, casino chips, and so on, there is caused a problem that when the tags 1 overlap one another, communication performance is exceedingly degraded and the tags cannot favorably have access to the interrogator (reader/writer) 2. These applications involve the case where the RFID tags 1 stack, or the case where a spacing between a tag 1 and a tag 1 is set to be very small.

In such case, Ls (inductance of resonance coil) of the both tags 1 interconnect each other to form mutual inductance, and proper inductances of the tags 1 link with the mutual inductance to tend to become large.

This means that since resonance capacitors present in the tags 1 assume a fixed value, resonance frequency decreases as compared with those (expected resonance frequency and frequency prescribed by the interrogator) in a state free of interconnection.

Meanwhile, oscillation is performed on a side of the interrogator (reader/writer) 2 at the same frequency as the expected resonance frequency of the tags 1. This means that an off-resonance magnetic field from the side of the interrogator (reader/writer) 2 is supplied to the tags 1, a resonance point of which is decreased due to overlapping of the tags 1, and energy as supplied is correspondingly decreased. As a result, communication range is decreased.

In order to eliminate a decrease in communication range due to overlapping of the tags 1, JP-A-2000-151480 discloses an identification system in the case where a plurality of tags overlap one another. The document describes a configuration, in which capacitors housed in tags are switched over to be able to modify a resonance frequency, and a method, in which an internal capacitor is switched over every tag among the plurality of overlapped tags to perform adjustment conformed to a desired frequency. Resonance frequencies of other tags are sequentially modified after the completion of communication with one tag.

With this method, a resonance frequency of a certain tag can be conformed to a resonance frequency issued by an interrogator but resonance frequencies of other tags are offset from the resonance frequency issued by the interrogator. Accordingly, a general collision preventive procedure (for example, JIS 6323-3 ISO/IEC15693-3, or the like) is not used, an interrogator and tags perform communication in 1 to 1.

In addition, there is not described any method of determining the sequence of a plurality of tags (which tag adjustment of resonance frequency should be performed from), and there is caused a problem that a stable operation is difficult to be ensured in a practical system and so difficult to realize.

EP-A-1061633 and WO-A-02/15124 each disclose a RFID tag having a resonance circuit comprising an inductance and a plurality of resonance capacitances, and a switching circuit for connecting/disconnecting one or more of the capacitances. The resonance circuit outputs a signal via an interrogator which is smoothed by a power circuit, that output is passed to a voltage detector. In each document, the aim is to derive information which indicates when tags are close to each other (collision information).

In particular, when the inductance of a RFID tag overlaps other tags, a mutual inductance is generated, so that an L value is correspondingly increased. Accordingly, a C value for resonance is decreased in response to an increment of L to keep a resonance frequency constant at all times, thereby solving a disadvantage such as insufficient increase in power supply voltage. In addition, a plurality of resonance capacitors are provided and these resonance capacitors configured under a certain condition are separated from one another, whereby a capacitor value is decreased and that decrease in resonance frequency, which is affected by an increase in mutual inductance, may be corrected.

The present invention provides an RFID tag comprising inductance and a plurality of resonance capacities to form a resonance circuit, a switching circuit for making at least one or more of the plurality of resonance capacities ON/OFF, a power circuit for smoothing a power signal provided from an interrogator (reader/writer) via the resonance circuit to output a smoothed signal, voltage detection means for detecting a voltage of the smoothed signal, voltage monitor means for monitoring a rate, at which the smoothed signal rises, resonance capacitive switching command means for commanding ON/OFF of the switching circuit in response to an output of the voltage monitor means when a predetermined rate of rise of said smoothed signal is not obtained, and anti-collision information output means for outputting anti-collision information in response to a command from the interrogator.

Also, the resonance capacities according to the invention may compris a fixed capacity and at least one or more adjustment capacities and when the resonance capacities are increased in resonance frequency, the adjustment capacities are separated therefrom to reduce the resonance capacities in capacitance value whereby control is performed to make the resonance frequency approach a resonance frequency prescribed by the interrogator.

Further, the voltage monitor means according to the invention may comprise a first voltage detection circuit for outputting a detection output when the constant voltage circuit outputs a relatively low voltage (v1), a timer circuit, which receives an output of the first voltage detection circuit to output a timer signal for a predetermined period of time, and a second voltage detection circuit for outputting an output when an output of the constant voltage circuit reaches a voltage (V2) capable of a circuit operation, and wherein when an output of the second voltage detection circuit is not obtained during a term, during which a timer signal is output by the timer circuit, the switching circuit is driven to reduce the resonance capacities in capacitance value while an operation of the switching circuit for reduction of capacitance value returns the resonance circuit to an initial state in the case where the voltage (V2) capable of a circuit operation cannot be reached.

Also, the voltage monitor means according to the invention may sequentially separate the adjustment capacities every predetermined period of time in the case where there are a plurality of adjustment capacities, and returns the resonance circuit to the initial state in the case where all the adjustment capacities are separated and the voltage (V2) capable of a circuit operation cannot be reached.

The RFID tag according to the invention permits a resonance frequency of the resonance circuit to be switched to make a resonance frequency approach a resonance frequency of the interrogator (reader/writer) to be able to ensure power received by the resonance circuit to stably execute data communication with the interrogator (reader/writer).

### IN THE DRAWINGS

Fig. 1 is a view showing an outline of a system comprising RFID tags and a RFID interrogator making use of the tags;
Fig. 2 is a block diagram showing an essential part of an embodiment of a RFID tag according to the invention;
Fig. 3 is a view showing a waveform of the RFID tag according to the invention;
Fig. 4 is a view showing another waveform of the RFID tag according to the invention;
Fig. 5 is a flowchart showing an operation of an embodiment of the RFID tag according to the invention;
Fig. 6 is a view showing information of UIDs (proper numbers of tags) for discrimination of RFID tags according to the invention;
Fig. 7 is an operation flowchart of an anticollision sequence according to the invention;
Fig. 8 is a view showing area storage of a collision slot buffer according to the invention;
Fig. 9 is a view showing data storage of a detection UID buffer according to the invention; and
Fig. 10 is a flowchart showing an operation of a simple collision correspondence algorithm according to the invention.

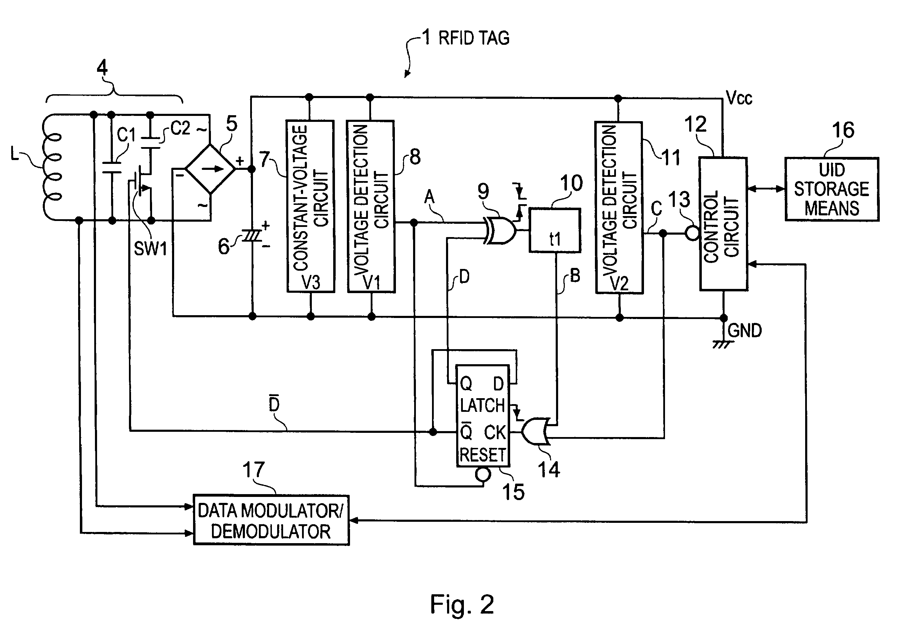

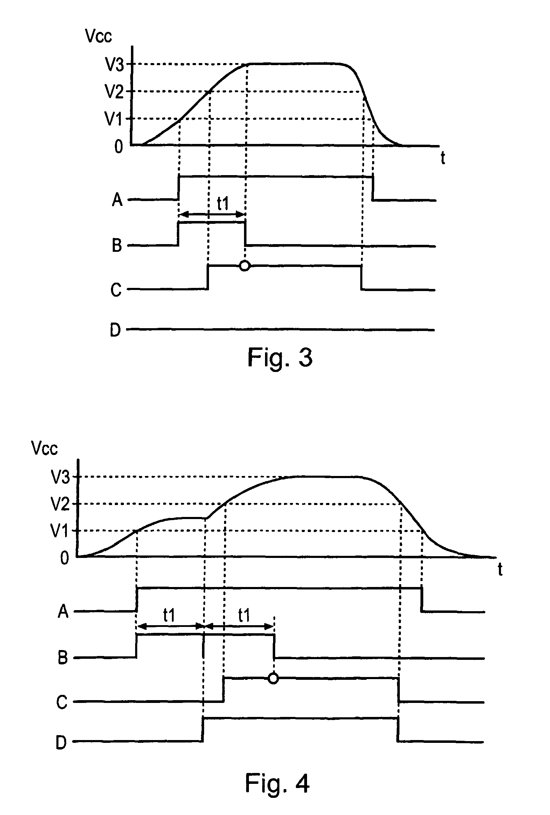

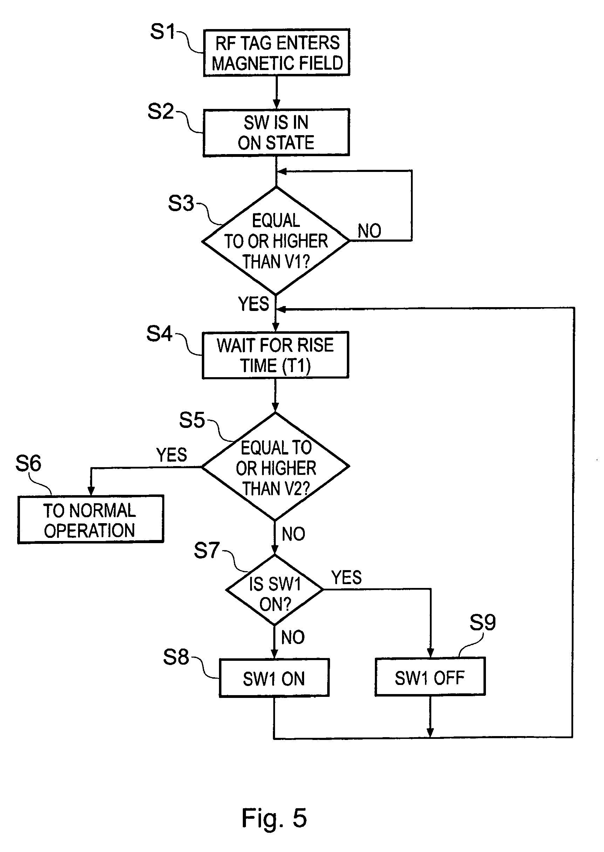

An explanation will be given below to an embodiment of the invention with reference to the accompanying drawings. Fig. 2 is a block diagram showing an essential part of an embodiment of a RFID tag according to the invention, Fig. 3 is a view showing a waveform of the RFID tag according to the invention, Fig. 4 is a view showing another waveform of the RFID tag according to the invention, and Fig. 5 is a flowchart showing an operation of an embodiment of the RFID tag according to the invention. In addition, in Fig. 2, voltage detection means 8, 11 constitutes voltage monitor means, a latch circuit 15 constitutes resonance capacitive switching command means, and a control circuit 12, UID storage means 16, and a data modulator/demodulator 17 constitutes anti-collision information output means.

With a RFID tag 1, a coil L, a resonance capacitor C1, and an adjustment capacitor C2 constitute a parallel resonance circuit 4. Since a switching circuit SW1 formed of a semiconductor such as CMOS-FET is made ON in an initial state, the adjustment capacitor C2 and the resonance capacitor C1 are connected parallel to each other in the initial state to be contained in the resonance circuit 4. The resonance circuit 4 resonates when entering into a high-frequency field (corresponding to a detection area 3 in Fig. 1) given by an antenna of an interrogator (reader/writer) 2, and its resonant output is applied to a rectification circuit 5.

As a result, the rectification circuit 5 outputs D.C (resulted from rectification) conformed to a degree of coupling of the RFID tag 1 and an antenna of the interrogator (reader/writer) 2. The D.C is smoothed by a smoothing capacitor 6 and stabilized by a constant-voltage circuit 7. However, output of the constant-voltage circuit 7 is not stabilized until a predetermined period of time has elapsed after the RFID tag 1 enters the detection area 3, and output Vcc of the constant-voltage circuit 7 is not made stable at the beginning of entry. The state of affairs is important in the invention and will be described below in detail.

Meanwhile, various commands received from the interrogator (reader/writer) 2 via the coil L are demodulated by the data modulator/demodulator 17, and demodulated commands are supplied to the control circuit 12 to be subjected to processing. The control circuit 12 collates UID contained in the commands and UID of UID storage means 16 with each other, and outputs UID to the data modulator/demodulator 17 in the case of agreement to send UID, which has been subjected to modulation by the data modulator/demodulator 17, to the interrogator (reader/writer) 2 via the coil L.

Receiving a data calling demand or a data writing demand, which is received from the interrogator (reader/writer) 2, via the coil L and then the data modulator/demodulator 17, the control circuit 12 reads demanded data from the UID storage means 16 to output the same, or to write demanded data into the UID storage means 16.

Also, receiving a demand for inhibition of command response from the interrogator (reader/writer) 2, the control circuit 12 sets an inhibition mode to inhibit a response to a command as long as electric power is supplied.

Explaining with a waveform shown in Fig. 3, a constant-voltage output Vcc is initially 0. As the RFID tag 1 enters the detection area 3, Vcc rises. And when a voltage V1 is reached, the voltage V1 is detected by the first voltage detection circuit 8, and the voltage detection circuit 8 starts a detection output A.

The output A is applied to a timer circuit 10 via an exclusive logical add (exclusive OR) circuit 9. The timer circuit 10 is triggered when the input rises or drops, and at this time outputs a time interval signal B of a predetermined timer time t1 as shown by a signal waveform B in Fig. 3.

When the constant-voltage output Vcc reaches a high voltage V2 in the course of the timer time t1, the voltage V2 is detected by the second voltage detection circuit 11 to cause a detection output C to rise. The detection output C is applied to a reset terminal 13 of the control circuit 12. A signal C applied to the reset terminal 13 rises whereby the control circuit 12 can perform its proper action such as access to the interrogator (reader/writer) 2, or the like. In other words, when the signal C is on a low level, the control circuit 12 is held in a reset state and its output part is at least immobilized so that no useless signal is output. The above matter describes the case where the RFID tag 1 enters the detection area 3 of the interrogator (reader/writer) 2 to act normally.

Subsequently, an explanation will be given to the case being not said to be normal as compared with the case shown in Fig. 3, using a waveform shown in Fig. 4. A power supply voltage Vcc shown in Fig. 4 does not rise smoothly as compared with the waveform shown in Fig. 3. As the reason for this, it is variously conceivable that as described previously, a plurality of RFID tags 1 overlap one another and are disposed in positions relatively distant from the interrogator (reader/writer) 2.

This state, which cannot be said to be normal, is shown in Fig. 4, and corresponds to STEP S5 and the following procedure in an operation flow shown in Fig. 5. That is, in the case where the RFID tags 1 overlap one another, the power supply voltage Vcc cannot reach a voltage V2 even after the timer time t1 has elapsed after a voltage V1 is reached. That is, an output C of the voltage detection circuit 11 for detecting the voltage V2 remains on a low level.

Meanwhile, when the timer time t1 has elapsed in this state, an output B of the timer circuit 10 drops, and such drop is applied to a clock terminal CK of the latch circuit 15 via an OR circuit 14, so that an output D of the latch circuit 15 is reversed. In this manner, when an output of the latch circuit 15 is reversed, an output (inverted D) connected to the switching circuit SW1 is reversed to low from high, and the switching circuit SW1 is put in an OFF state.

As a result, the adjustment capacitor C2 is cut off from the resonance circuit 4, and a resonance frequency of the resonance circuit 4 increases to approach a resonance frequency prescribed by the interrogator (reader/writer) 2. As a result, the power supply voltage Vcc rises as shown in Fig. 4. And when the power supply voltage Vcc reaches an operating voltage V2 of the circuit, an output C of the voltage detection circuit 11 changes to high from low in the same manner as described in the previous example, so that the control circuit 12 is put in an operative state. Thereby, a pertinent RFID tag 1 can be put in a state to be able to have access to the interrogator (reader/writer) 2.

The above manner provides a compensating operation effective in the case of involving overlapping of the RFID tags 1 and mutual intervention, but such compensating operation is in some cases disadvantageous. That is, with an application, in which the RFID tags 1 move to enter the detection area 3, there is also caused a phenomenon, in the case where the RFID tag 1 is single, that when a distance from the interrogator (reader/writer) 2 is large, a level of an operable voltage V2 is not reached but a voltage V1, at which the timer circuit 10 is triggered, is reached.

In this case, when switching of the adjustment capacitor C2 is made, the compensating operation causes a resonance frequency of the RFID tag 1 to instead shift from a desired resonance frequency, which will greatly decrease a communication range of the pertinent, single RFID tag 1.

This is improved by an operation when the timer circuit 10 is again timed up, a state of which operation is indicated by a signal of a waveform B shown in Fig. 4. That is, in the case where the power supply voltage Vcc reaches an operating voltage V2 in the course of the timer time t1 for a second time, an output B of the timer circuit 10 drops while an output C of the voltage detection circuit 11 remains on a low level differently from the above example. Therefore, an output of the OR circuit 14 drops . As a result, a state of the latch circuit 15, to the clock terminal CK of which an output of the OR circuit 14 is applied, is again reversed, and the switching circuit SW1 is put in an ON state to cause connection of the adjustment capacitor C2, so that the resonance circuit 4 is returned to an initial state.

Thereby, as that RFID tag 1, in which the power supply voltage Vcc cannot reach an operating voltage V2 because a distance from the interrogator (reader/writer) 2 is initially large, moves to approach the interrogator (reader/writer) 2, the power supply voltage Vcc will rise. When the power supply voltage Vcc rises to reach an operating voltage V2, the operating voltage V2 is detected by the voltage detection circuit 11 and the control circuit 12 is set in a state to be able to have access to the interrogator (reader/writer) 2.

In this manner, even in the case where RFID tags 1, 1 overlap and superpose one another as shown in, for example, a part of Fig. 1, respective resonance frequencies can be made to approach a frequency prescribed by the interrogator (reader/writer) 2, a voltage value of the power supply voltage Vcc is ensured, and an access state can be comparatively simply set, in which transmission and reception of signals can be made between the respective RFID tags 1 and the interrogator (reader/writer) 2.

Subsequently, an explanation will be given to an anticollision (recognition of a plurality of transponders) technique for discriminating between the respective RFID tags 1. Here, embodiments will be explained on the basis of Japanese Industrial Standards (JIS) X6323-3 (ISO/IEC15693-3) "IC cards without external terminals - neighborhood type - Third section: prevention of collision and transmission protocol). Accordingly, the standards document issued by Japanese Standards Association is helpful in understanding the embodiments further deeply.

With an anticollision algorithm adopted here, an inventory of a plurality of transponders (RFID tags 1, 1, 1, ···) present in a communication area 3 of the interrogator (reader/writer) 2 is extracted on the basis of UIDs (proper numbers of tags).

What can detect the existence of a plurality of transponders (RFID tags) is the interrogator (reader/writer) 2 (the RFID tags themselves, which are the transponders, can know the existence of other transponders according to only information from the reader/writer 2), and what mainly executes algorithm is the reader/writer 2.

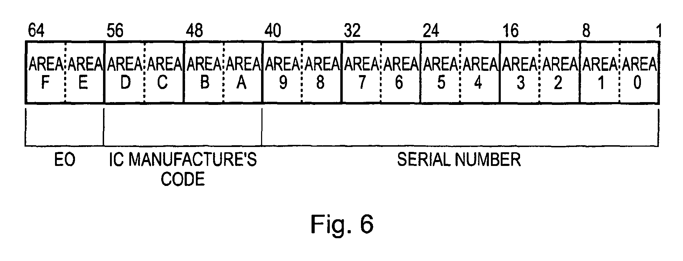

Fig. 6 shows UIDs (proper numbers of tags) being information for discrimination of the respective RFID tags. In this embodiment, UIDs are composed of 64 bits, and a character length of time slot number in binary numeral defines an area as shown in Fig. 6. Here, since the time slot number is 16, the area is divided in a unit of 4 bits, and UIDs are divided into 16 areas. The UIDs set the respective RFID tags with 56 bits in 14 areas, which are composed of 4 areas, that is, areas A, B, C, and D, of IC manufacture's codes and 10 areas of serial numbers, in a unique manner, and are written and preserved in the control circuit 12 of the RFID tag 1.

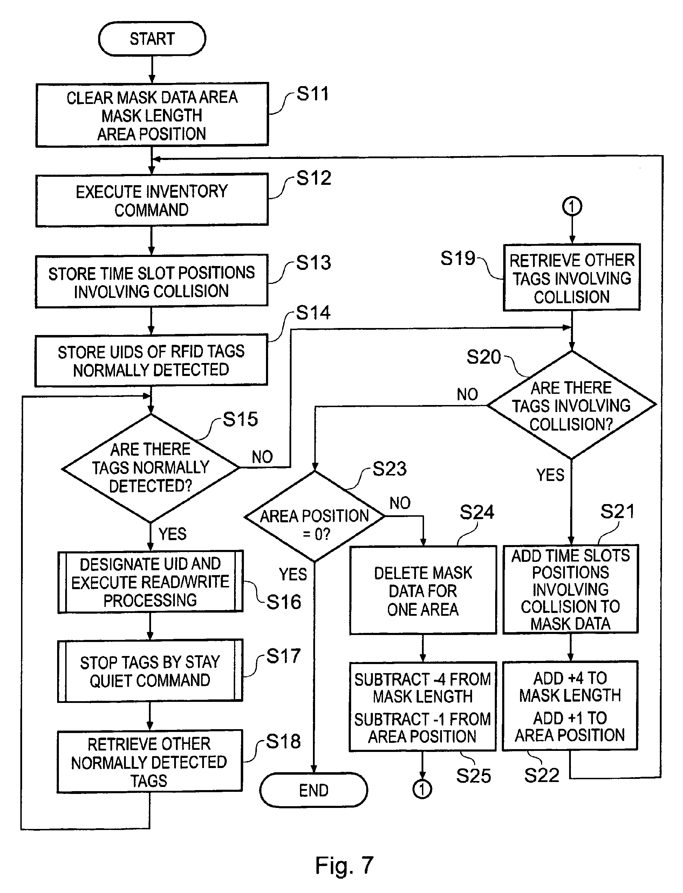

Subsequently, an explanation will be given to an anticollision sequence with reference to an operation flowchart shown in Fig. 7. The operation flowchart shown in Fig. 7 indicates contents of a program stored in the interrogator (reader/writer) 2 to be executed. Here, a typical anticollision sequence will be described in the case where the time slot number is 16.

First, an area (mask data area), in which mask relational data of the interrogator is stored, is initialized in STEP S11. In this initialization, mask length data is set at 0, mask value data is set at a predetermined value, and area position data representative of positions, in which UIDs (proper data) stored in RFID tags are operated, is also set at 0.

When preparations for issuing a command are made in this manner, the reader/writer 2 subsequently sends an Inventory command in STEP S12. As a result, the Inventory command is sent to a plurality of RFID tags 1. And since the respective RFID tags 1 have a mask length of 0, they independently return a response to the interrogator (reader/writer) 2 in their time slot timings, which are determined in the area of 0 in UFDs. Accordingly, access between the both causes, in many cases, the respective UIDs to independently return a response to the interrogator (reader/writer) 2, but responses collide, in some cases, against one another for some of the RFID tags 1.

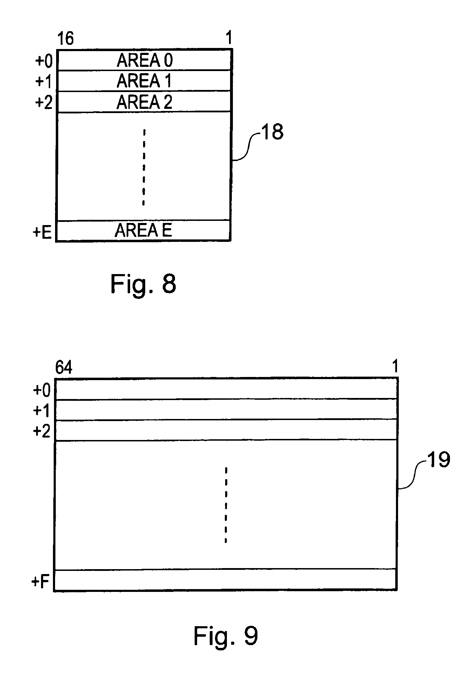

Coping with this, in STEP S13, time slot positions, in which collision occurs, are detected by detecting signals on sides of those RFID tags 1, which respond to the Inventory command. The detected time slot positions are stored in a collision slot buffer 18 shown in Fig. 8. As described later, this is intended for distinguishing RFID tags 1 having made collision. In addition, the collision slot buffer 18 is formed in the interrogator (reader/writer) 2.

In the case where no collision occurs, existence of tags is normally detected in the subsequent STEP S14, and then the UID data of the pertinent RFID tags 1 is stored and held in a detection UID buffer 19 shown in Fig. 9. The detection UID buffer 19 is also formed in the interrogator (reader/writer) 2. In this manner, time slot data involving collision and UID data are accumulated in the buffers 18, 19 of the interrogator (reader/writer) 2.

Subsequently, in the case where normally detected tags are present, the fact is confirmed in STEP S15 and next control is executed STEP S16. In STEP S16, contents of the detection UID buffer 19 are referred to, and the interrogator (reader/writer) 2 designates UIDs to specify pertinent (having UIDs) tags to have access to the tags. That is, giving and taking of necessary data/information are completed.

After the completion of such access, a command for setting of a state, in which no response is returned to an Inventory command called STAY QUITE command, is sent to the pertinent RFID tags 1 in STEP S17 to stop an operation as tags. (However, when an electric source is reset, the procedure is returned to a state, in which a response is returned). Thereby, access to the pertinent RFID tags 1 is terminated in this timing, the procedure shifts to a state equivalent to a state, in which the pertinent RFID tags 1 are not existent (no inventory).

Subsequently, the existence of other detected RFID tags 1 is retrieved in STEP S18, and in the case where other RFID tags 1 are detected in STEP S15, the STEP S16 and the following STEPS are repeated, and the processing for each of the pertinent RFID tags 1 is executed. When the processing for normally detected RFID tags 1 is wholly terminated, judgment in STEP S15 results in No and control is transferred to STEP S20.

In STEP S20, contents of the collision slot buffer 18 are referred to judge whether RFID tags 1 involving collision are present or not. When it is detected that there has been caused collision, judgment in STEP S20 passes Yes, and processings for distinguishing tags involving collisions with the use of UIDs are executed in STEP S21 and the following STEPs.

More specifically, first time slot positional data among time slots, in which collision occurs, is taken in as mask relational data in STEP S21. In the present embodiment, 16 time slots are present as described previously. An explanation is given here assuming that collision occurs in two locations, that is, a time slot 1 and a time slot 4. In this example, "1", that is, binary data (0001) is stored as the first time slot positional data. Besides, the data (0001) is stored as mask value data.

In the subsequent STEP S22, +4 is added to a mask length, an initial value of which is 0 (see STEP S11). As a result, the mask length is set at 4 bits. Also, +1 is also added to an area position with the result that an area 1 (see Fig. 6) of UID is selected as positional data, by which a subsequent time slot is designated.

In this manner, when a condition for execution of a subsequent Inventory command is prepared, control is transferred to STEP S12. An Inventory command being subsequently executed is different from contents at the last time, and updating is made to make "mask length" "4", "mask value" "0001", and "area position of UID" "1". Thus an Inventory command of updated contents is executed. Since a value (0001), for which collision has occurred once, is included as a mask at this time when there are present tags involving collision, a plurality of RFID tags 1 are surely present. However, since "area position of UID" for designation of a timing, in which RFID tags 1 return responses, is different from that at the last time, there is a small possibility that collision again occurs. However, it cannot be said on the theory that the possibility is nil.

Anyhow, when an Inventory command is again executed, STEPS S15, S16, S17, S18 are correspondingly repeated likewise the last time. Thereby, having access to the interrogator (reader/writer) 2 is completed for normally detected RFID tags 1, and those RFID tags 1, for which access cannot be completed due to situation of collision, are gradually decreased. However, RFID tags 1 cannot be made nil on the theory. Accordingly, in the case where tags involving collision are left in spite of execution of an Inventory command at the second time, control is again transferred to STEP S20 and judgment results in Yes. Subsequently, the processing for updating of an Inventory command in STEPS S21, S22 is again executed, and an Inventory command at the third time is correspondingly executed in STEP S12.

Subsequently, when the processing for updating of mask position is repeated and tags involving collision run short, judgment in STEP S20 results in No, and control is transferred to STEP S23 this time. As a result, as control for returning an area position, a processing for repeating STEPS S24, S25 and STEP S19 is executed this time. This is directed to covering a void generated in the same area position in the case where collision occurs in a plurality of slots. A series of processings are executed and an anticollision sequence is completed at a point of time when an area position is returned to 0. By repeating such processing, it is possible to substantially lose those RFID tags 1 left, to which access cannot be had due to collision.

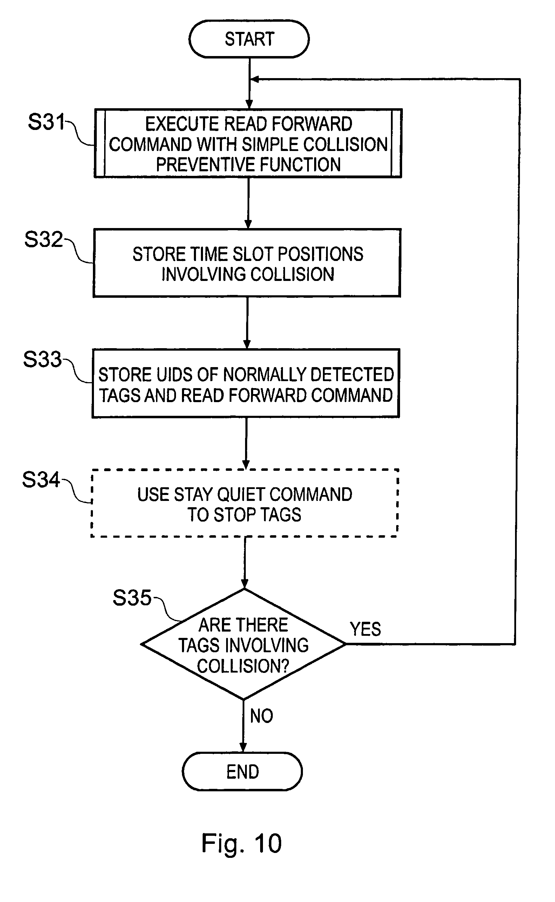

Subsequently, an explanation will be given to a simple collision correspondence algorithm shown in Fig. 10. In a flowchart shown in Fig. 10, the anticollision algorithm shown in Fig. 7 is simplified and a read forward command with a simple collision preventive function is executed in STEP S31. In addition, here, a command having a cord as to what number of proper IDs of tags a slot for prevention of collision should be started from, and a cord indicative of a location of data, which is desired to be read from tags, is issued as the command. As a result, time slots involving collision, UIDs normally detected, and a desired read data are stored and held as in STEPS S12, S13.

In the case where collision occurs, judgment in STEP S35 results in Yes, and the read forward command with the simple collision preventive function in STEP S31 is again executed. In this case, the elaborate algorithm shown in the flowchart of Fig. 7 is not executed but a subsequent command with a simple algorithm is executed in STEP S31. That is, the subsequent command is executed by shifting a slot beginning position to a subsequent position.

In this manner, in the case where the slot beginning position is simply shifted, it is not possible to completely eliminate another occurrence of collision between the same RFID tags 1. As described previously, however, RFID tags 1, respectively, are given at least a unique UID in 56 bits composed of an IC manufacture's code and a serial number, and even when a command for movement of the slot beginning position is simply and readily executed as described above, such processing is repeated several times following the second time to thereby enable substantially identifying the respective RFID tags 1, and so there is caused no problem or no disadvantage in an ordinary application.

This has been confirmed in experiments performed by the inventors of the present application and experiences of the inventors. An advantage obtained by adopting such simple collision preventive algorithm resides in that the system configuration is of course made simple to make maintenance easy, and speed of access between the RFID tags 1 and the interrogator (reader/writer) 2 can be increased with the result that in an application in the case where the RFID tags 1 and the interrogator (reader/writer) 2 move relative to each other, reliability in giving and taking of signals is improved to be advantageous in ensuring reliability for the system. In such case, the simple collision preventive algorithm can be positively adopted by selecting a condition for the application.

In addition, the adjustment capacitor C2 in the embodiment is one in number as shown in the circuit diagram of Fig. 2. A fine adjustment is made possible by providing a plurality of adjustment capacitors C2. However, various experiments performed by the inventors of the present application and the like reveals that one adjustment capacitor is sufficient in using the anticollision algorithm.

As described previously, according to the invention, the anticollision correspondence algorithm is loaded on the RFID tags and the switching circuit for switching ON/OFF of resonance capacity is provided on the RFID tags. Therefore, when a certain power supply voltage/operating voltage is obtained on a side of the RFID tags, the anticollision correspondence algorithm can surely identify individual RFID tags. Therefore, a stable operation can be ensured even when changes in resonance frequencies are comparatively roughly set, the whole system can be simply improved in reliability and is very high in practicability.

## Claims

1. A RFID tag (1) comprising
inductance (L) and a plurality of resonance capacities (C1, C2) to form a resonance circuit (4),
a switching circuit (SW1) for making at least one or more of the plurality of resonance capacities (C1, C2) ON/OFF,
a power circuit (5, 6, 7) for smoothing a power signal provided from an interrogator (reader/writer) (2) via the resonance circuit (4) to output a smoothed signal,
voltage detection means for detecting a voltage of the smoothed signal, and
anti-collision information output means (12, 16, 17) for outputting anti-collision information in response to a command from the interrogator (2);
**characterised in that** the tag further comprises:
voltage monitor means (8, 10, 11) for monitoring a rate, at which the smoothed signal rises,
resonance capacitive switching command means (15) for commanding ON/OFF of the switching circuit (SW1) in response to an output of the voltage monitor means when a predetermined rate of rise of said smoothed signal is not obtained.

2. The RFID tag according to claim 1, wherein the resonance capacities comprise a fixed capacity (C1) and at least one or more adjustment capacities (C2) and when the resonance capacities (C1, C2) are increased in resonance frequency, the adjustment capacities are separated therefrom to reduce the resonance capacities in capacitance value whereby control is performed to make the resonance frequency approach a resonance frequency prescribed by the interrogator (2).

3. The RFID tag according to claim 1, wherein the voltage monitor means (8,11) comprises a first voltage detection circuit (8) for outputting a detection output when the smoothed signal from the power circuit (5,6,7) is a relatively low voltage (V1), a timer circuit (10) which receives an output of the first voltage detection circuit (8) to output a timer signal for a predetermined period of time, and a second voltage detection circuit (11) for outputting an output when the smoothed signal reaches a voltage (V2) capable of a circuit operation, and wherein when an output of the second voltage detection circuits (11) is not obtained during a term, during which a timer signal is output by the timer circuit (10), the switching circuit (SW1) is driven to reduce the resonance capacities (C1,C2) in capacitance value while an operation of the switching circuit (10) for reduction of capacitance value returns the resonance circuit (4) to an initial state in the case where the voltage (V2) capable of a circuit operation cannot be reached.

4. The RFID tag according to claim 3, wherein the voltage monitor means (8,10,11) is arranged sequentially to separate the adjustment capacities every predetermined period of time in the case where there are a plurality of adjustment capacities, and returns the resonance circuit (4) to the initial state in the case where all the adjustment capacities are separated and the voltage (V2) capable of a circuit operation cannot be reached.

## Patentansprüche

1. RFID-Etikett (1), umfassend
eine Induktivität (L) und eine Vielzahl an Resonanzkapazitäten (C1, C2) zur Bildung eines Schwingkreises (4),
einen Schalterkreis (SW1) zum Ein-/Ausschalten von zumindest einem der Vielzahl an Resonanzkapazitäten (C1, C2),
einen Versorgungskreis (5, 6, 7) zum Glätten eines von einer Abfragevorrichtung (Leser/Schreiber) (2) über den Schwingkreis (4) bereitgestellten Spannungssignals, um ein geglättetes Signal auszugeben,
eine Spannungsdetektionsmittel zum Detektieren der Spannung des geglätteten Signals, und
ein Ausgabemittel (12, 16, 17) für Antikollisionsinformationen, um als Reaktion auf einen Befehl der Abfragevorrichtung (2) Antikollisionsinformationen auszugeben;
**dadurch gekennzeichnet, dass** das Etikett weiters Folgendes umfasst:
ein Spannungsüberwachungsmittel (8, 10, 11) zur Überwachung der Rate, mit der das geglättete Signal ansteigt,
ein Resonanzkapazitätenschalterbefehlsmittel (15) zum Befehlen des Ein-/Ausschaltens des Schalterkreises (SW1) als Reaktion auf ein Ausgangssignal des Spannungsüberwachungsmittels, wenn eine vorbestimmte Rate des Anstiegs des geglätteten Signals nicht erreicht wird.

2. RFID-Etikett nach Anspruch 1, worin die Resonanzkapazitäten eine fixe Kapazität (C1) und zumindest eine oder mehrere Einstellkapazitäten (C2) umfassen, und worin beim Anstieg der Resonanzfrequenz der Resonanzkapazitäten (C1, C2) die Einstellkapazitäten (C2) von diesen abgetrennt werden, um die Resonanzkapazitätswerte zu senken, wodurch eine Steuerung durchgeführt wird, um eine Annäherung der Resonanzfrequenz an eine von der Abfragevorrichtung (2) vorgeschriebene Resonanzfrequenz zu erhalten.

3. RFID-Etikett nach Anspruch 1, worin das Spannungsüberwachungsmittel (8, 11) eine erste Spannungsdetektionsschaltung (8) für die Ausgabe eines Detektionsausgangssignals, wenn das geglättete Signal des Versorgungskreises (5, 6, 7) eine relativ niedrige Spannung (V1) aufweist, eine Zeitgeberschaltung (10), die ein Ausgangssignal der ersten Spannungsdetektionsschaltung (8) empfängt, um für eine vorbestimmte Zeitdauer ein Zeitgebersignal auszugeben, und eine zweite Spannungsdetektionsschaltung (11) für die Ausgabe eines Ausgangssignals, wenn das geglättete Signal eine Spannung (V2) erreicht, die zu einem Schaltungsbetrieb fähig ist, umfasst, und worin der Schalterkreis (SW1) angesteuert wird, um den Kapazitätswert der Resonanzkapazitäten (C1, C2) zu senken, wenn in einem Zeitraum, während dessen von der Zeitgeberschaltung (10) ein Zeitgebersignal ausgegeben wird, kein Ausgangssignal der zweiten Spannungsdetektionsschaltung (11) empfangen wird, während eine Betätigung des Schalterkreises (10) zur Senkung des Kapazitätswerts den Schwingkreis (4) in einen Anfangszustand zurückführt, für den Fall, dass die zu einem Schaltungsbetrieb fähige Spannung (V2) nicht erreicht werden kann.

4. RFID-Etikett nach Anspruch 3, worin das Spannungsüberwachungsmittel (8, 10, 11) sequentiell angeordnet ist, um die Einstellkapazitäten zu jeder vorbestimmten Zeitdauer zu trennen, für den Fall, dass eine Vielzahl an Einstellkapazitäten vorliegt, und den Schwingkreis (4) in den Anfangszustand zurückführt, für den Fall, dass alle Einstellkapazitäten getrennt sind und die zu einem Schaltungsbetrieb fähige Spannung (V2) nicht erreicht werden kann.

## Revendications

1. Etiquette RFID (1) comprenant
une inductance (L) et plusieurs capacités de résonance (C1, C2) pour former un circuit de résonance (4),
un circuit de commutation (SW1) pour mettre EN/HORS service, au moins une ou plusieurs de la plura lité des capacités de résonance (C1, C2),
un circuit de puissance (5, 6, 7) pour lisser un signal de puissance fourni d'un interrogateur (organe de lecture/écriture) (2) par le circuit de résonance (4) pour émettre un signal lissé,
un moyen de détection de tension pour détecter une tension du signal lissé, et
un moyen de sortie d'information anti -collision (12, 16, 17) pour émettre une information anti-collision en réponse à une commande de l'interrogateur (2);
**caractérisée en ce que** l'étiquette comprend en outre:
un moyen de surveillance de tension (8, 10, 11) pour surveiller une vitesse à laquelle le signal lissé monte,
un moyen de commande de commutation capacitive de résonance (15) pour commander l'état EN/HORS SERVICE du circuit de commutation (SW1) en réponse à une sortie du moyen de surveillance de tension, lorsqu'un taux d'augmentation prédéterminé dudit signal lissé n'est pas obtenu.

2. Etiquette RFID selon la revendication 1, où les capacités de résonance comprennent une capacité fixe (C1) et au moins une ou plusieurs capacités d'ajustement (C2), et lorsque la fréquence de résonance des capacités de résonance (C1, C2) est augmentée, les capacités d'ajustement sont séparées de celles-ci afin de réduire la valeur de capacité des capacités de résonance, par quoi une commande est exécutée pour amener la fréquence de résonance à s'approcher d'une fréquence de résonance prescrite par l'interrogateur (2).

3. Etiquette RFID selon la revendication 1, où le moyen de surveillance de tension (8,11) comprend un premier circuit de détection de tension (8) pour émettre une sortie de détection lorsque le signal lissé du circuit de puissance (5, 6, 7) est une tension relativement basse (V1), un circuit d'horloge (10) qui reçoit une sortie du premier circuit de détection de tension (8) pour émettre un signal d'horloge pour une période de temps prédéterminée, et un deuxième circuit de détection de tension (11) pour émettre une sortie lorsque le signal lissé atteint une tension (V2) qui convient pour une opération de circuit, et où, lorsqu'une sortie du second circuit de détection de tension (11) n'est pas obtenue pendant un terme, pendant lequel un signal d'horloge est émis par le circuit d'horloge (10), le circuit de commutation (SW1) est entraîné pour réduire les capacités de résonance (C1, C2), en valeur de capacité, tandis qu'une opération du circuit de commutation (10) pour réduire la valeur de capacité, ramène le circuit de résonance (4) à un état initial dans le cas où la tension (V2) qui convient pour une opération de circuit ne peut pas être atteinte.

4. Etiquette RFID selon la revendication 3, où le moyen de surveillance de tension (8, 10, 11) est agencé séquentiellement pour séparer les capacités d'ajustement à chaque période de temps prédéterminé dans le cas où il y a plusieurs capacités d'ajustement et ramène le circuit de résonance (4) à l'état initial dans le cas où toutes les capacités d'ajustement sont séparées, et où la tension (V2) qui convient pour une opération de circuit, ne peut pas être atteinte.
